# FASCICULE DE BREVET EUROPEEN

(11) **EP 2 989 628 B1**
(45) Date de publication et mention de la délivrance du brevet: **30.10.2019**
(21) Numéro de dépôt: 14719042.5
(22) Date de dépôt: 25.03.2014
(51) Int. Cl.: G09G 5/00

(54) **PROCEDE DE PERSONNALISATION D'UN DISPOSITIF ELECTRONIQUE AFFICHEUR D'IMAGE ET DISPOSITIF ELECTRONIQUE AFFICHEUR D'IMAGE L'UTILISANT**
VERFAHREN ZUM INDIVIDUELLEN ANPASSEN EINER ELEKTRONISCHEN BILDANZEIGEVORRICHTUNG UND ELEKTRONISCHE BILDANZEIGEVORRICHTUNG UNTER VERWENDUNG DERSELBEN
METHOD OF CUSTOMIZING AN ELECTRONIC IMAGE DISPLAY DEVICE AND ELECTRONIC IMAGE DISPLAY DEVICE USING THE SAME

(30) Priorité: 25.04.2013 FR 1353786
(43) Date de publication de la demande: 02.03.2016
(73) Titulaire: Essilor International, 94220 Charenton-le-Pont (FR)
(72) Inventeur: SCHERLEN, Anne-Catherine, 94220 Charenton le Pont (FR)
(74) Mandataire: Jacobacci Coralis Harle
(86) Numéro de dépôt international: PCT/FR2014/050694
(87) Numéro de publication internationale: WO 2014/174168

(56) Documents cités:
- FR-A1- 2 882 849
- US-A1- 2005 128 192
- US-A1- 2007 159 470
- US-A1- 2009 089 718
- US-A1- 2011 157 180
- US-A1- 2012 250 039
- US-A1- 2012 254 779

## Description

### DOMAINE TECHNIQUE AUQUEL SE RAPPORTE L'INVENTION

La présente invention concerne de manière générale le domaine des dispositifs électroniques afficheur d'image ayant un écran de visualisation tels qu'un ordinateur, une télévision, un téléphone intelligent, une tablette numérique, une liseuse numérique ou encore un télé-agrandisseur ou une loupe électronique. L'invention concerne également les dispositifs électroniques afficheur d'image dépourvus d'écran de visualisation tels que des lunettes informatives qui permettent d'afficher une ou deux images virtuelles en direction des yeux du porteur de ces lunettes informatives pour la vision d'images en vision monoculaire ou en vision stéréoscopique.

Ces dispositifs électroniques afficheur d'image sont utilisés pour afficher un document numérique sous la forme d'une image ou d'un texte numérisé, d'une vidéo ou d'une page internet.

Ces dispositifs électroniques afficheur d'image disposent généralement de moyens d'ajustement de paramètres d'affichage (ou paramètres de configuration) permettant par exemple d'agrandir l'image du document numérique affiché, d'augmenter le contraste ou la luminosité de l'affichage.

L'invention concerne plus particulièrement la personnalisation et l'adaptation des paramètres d'affichage d'un appareil électronique de visualisation d'images, notamment en fonction des capacités visuelles de l'utilisateur, des conditions d'utilisations et/ou en fonction du contenu de l'image que l'utilisateur souhaite visualiser.

### ARRIERE-PLAN TECHNOLOGIQUE

Les dispositifs électroniques à écran numérique se développent sans cesse dans notre société : téléphone intelligent, tablette numérique, ordinateur, vidéo projecteur deviennent omniprésents.

De manière générale, est entendu par dispositif électronique afficheur d'image, tout dispositif opto-électronique adapté pour afficher ou projeter une image réelle ou virtuelle destinée à être visualisée par un utilisateur.

Les différents dispositifs électroniques afficheur d'image impliquent des conditions d'utilisation différentes, notamment en termes de :
- distance d'utilisation différente entre l'utilisateur et l'écran selon le type d'écran par exemple pour un téléviseur et une tablette numérique,
- condition d'utilisation statique ou dynamique pour un téléphone intelligent,
- condition variable de luminosité ambiante pour des lunettes informatives ou autres systèmes (tablettes, téléphone...).

Ces différentes conditions d'utilisations entraînent des performances visuelles différentes pour un même utilisateur.

De plus, des types d'activités variées de vision peuvent être associés à un dispositif électronique afficheur d'image : lecture d'un texte numérisé, visionnage d'une image fixe, d'une vidéo ou d'un film. Selon la manière dont on utilise un dispositif électronique afficheur d'image et selon le type d'activité, l'utilisation d'un dispositif électronique afficheur d'image peut être à l'origine d'une fatigue visuelle ou de maux de tête.

Ces désagréments peuvent toucher aussi bien des utilisateurs sains jeunes ou âgés que des utilisateurs affectés par une pathologie entraînant une déficience visuelle telle qu'une baisse d'acuité visuelle, de perception des contrastes ou une pathologie de type neurologique entraînant des difficultés d'attention ou de mouvements des yeux.

Ainsi, une personne déficiente visuelle souffre d'une perte d'acuité visuelle, d'une perte de sensibilité aux contrastes et éprouve des difficultés à bouger les yeux pour lire un texte ou reconnaître une image. Afin de lui permettre de reconnaître et de comprendre une image ou un texte affiché, il est nécessaire d'appliquer un traitement de l'image ou du texte, ou encore d'utiliser des aides visuelles pour adapter le contenu de l'image ou du texte aux performances visuelles de cette personne.

Des aides visuelles fréquemment utilisées peuvent consister à agrandir la taille de l'image pour compenser une perte d'acuité visuelle ou à afficher un texte en blanc sur fond noir pour augmenter le contraste ou encore à disposer le contenu de l'image affichée sur une seule partie de l'écran (sur une ligne par exemple) de telle manière à réduire au maximum les mouvements oculaires liés aux stratégies d'exploration dans le texte.

De tels traitements d'image et/ou de texte sont possibles avec des appareils adaptés pour numériser un support (texte, image) et afficher une image numérisée sur un écran de visualisation.

Par exemple, un télé-agrandisseur (aussi appelé CCTV pour closed circuit TV) ou une loupe électronique offre à un utilisateur des fonctions de rehaussement de l'image comprenant l'ajustement du grossissement, du contraste, etc. pour adapter au mieux l'image à l'utilisateur.

Cependant, c'est à l'utilisateur de choisir et d'adapter les paramètres de l'affichage en ajustant différents boutons de contrôle de l'image jusqu'à ce que l'utilisateur trouve un confort visuel optimal. Ce réglage peut être complexe car l'utilisateur peut éprouver des difficultés à percevoir et manipuler les boutons réels, par exemple sous forme de touches sur les bords de l'écran, ou virtuels, dans le cas d'un écran tactile par exemple.

De plus, le réglage de l'ensemble des paramètres nécessite du temps pour ajuster par exemple le grossissement, le contraste, la luminosité, la couleur du texte affiché, la couleur du fond, etc., en fonction des préférences de l'utilisateur.

D'autre part, ces réglages doivent généralement être ré-adaptés pour chaque nouveau support de document numérisé sous forme de texte ou d'images : la taille du texte à l'origine de l'image affichée, la luminance du papier peuvent changer, induisant ainsi un paramétrage différent.

Il existe des moyens d'enregistrer différents paramétrages sur un même appareil électronique afficheur d'image.

On connaît notamment un télé-agrandisseur de la société Optelec qui propose un paramétrage d'écran par code barre. L'utilisateur définit lui-même les valeurs de paramétrage d'une image pour une condition d'utilisation déterminée, puis enregistre lui-même cette configuration en l'attribuant à un code barre. L'utilisateur peut ainsi mémoriser plusieurs configurations correspondant par exemple à différents types de supports de texte pour la lecture à l'écran ou respectivement à un support d'image pour la visualisation de films.

Par exemple, l'utilisateur définit une première configuration associée à une valeur de grossissement d'image pour la lecture d'un texte imprimé sur l'écran et une autre configuration associée à une taille d'image pour regarder un film sur ce même écran. L'utilisateur configure ainsi manuellement plusieurs paramétrages qui sont enregistrés sous forme de codes barre. L'utilisateur active ensuite le traitement d'image pré-programmé en sélectionnant le code barre adapté.

Toutefois, l'utilisateur doit mémoriser les différentes fonctions associées à chaque code barre, ce qui peut représenter une difficulté supplémentaire pour certains utilisateurs âgés par exemple.

Il existe un besoin pour adapter automatiquement les valeurs des paramètres d'affichage d'une image sur un écran en fonction des performances visuelles d'un utilisateur, des conditions d'utilisation et/ou du support de d'image : texte, image statique, image dynamique...

De plus, un même utilisateur doit effectuer à nouveau le paramétrage de chaque nouveau dispositif électronique afficheur d'image qu'il souhaite utiliser.

Il existe un besoin pour adapter facilement le paramétrage de différents dispositifs électroniques afficheur d'image en fonction des performances visuelles d'un même utilisateur et des conditions d'utilisation de chaque dispositif sans répéter les mêmes tests fastidieux.

Le document US 2012/250039 A1 décrit un système et une méthode pour présenter des informations a un utilisateur sur un seul dispositif d'affichage.

Le document US 2007/159470 A1 décrit un appareil pour ajuster des paramètres d'un dispositif d'affichage en fonction des performances visuelles d'un utilisateur.

Le document US 2005/128192 A1 divulge une méthode de présentation visuelle consistent à déterminer les données visuelles à afficher en fonction de données reçues indiquant les conditions lumineuses et de données reçues associées au profil visuel de l'utilisateur.

### OBJET DE L'INVENTION

La présente invention propose un procédé de personnalisation d'un dispositif électronique afficheur d'image ayant au moins un paramètre d'affichage de valeur variable, le dispositif étant adapté pour afficher une image et pour modifier l'image affichée en fonction de la valeur du paramètre d'affichage.

Plus particulièrement, on propose selon l'invention un procédé configuré pour permettre d'adapter la valeur du paramètre d'affichage à un utilisateur selon la revendication 1.

L'invention permet ainsi d'adapter automatiquement le paramétrage d'un dispositif électronique afficheur d'image en fonction du profil visuel et oculomoteur de l'utilisateur. L'invention permet d'enregistrer le paramétrage optimum associé à un dispositif électronique afficheur d'image et un utilisateur.

L'application du paramétrage permet une plus grande rapidité de lecture et/ou de reconnaissance d'image et apporte un confort visuel à l'utilisateur.

Selon un mode de réalisation particulier, le procédé de personnalisation d'un dispositif électronique afficheur d'image comporte en outre les étapes selon la revendication 2.

Selon un autre aspect particulier le procédé de personnalisation d'un dispositif électronique afficheur d'image comporte en outre les étapes selon la revendication 3.

Ainsi, le procédé de l'invention permet de personnaliser le contenu de l'image affichée.

D'autres caractéristiques non limitatives et avantageuses de procédé de personnalisation d'un dispositif électronique afficheur d'image conforme à l'invention sont revendiquées à la revendication 4.

Selon un mode de réalisation particulier et avantageux, le dispositif électronique afficheur d'image comporte un capteur adapté pour mesurer un paramètre environnemental et le procédé de personnalisation comporte les étapes selon la revendication 5.

Ce traitement de l'image affichée est robuste car il prend en compte le profil visuel et oculomoteur de l'utilisateur, l'environnement d'utilisation de l'appareil et la nature de l'activité de l'utilisateur.

Selon un autre mode de réalisation particulier et avantageux, le dispositif électronique afficheur d'image comporte des moyens de synthèse vocale et l'activation des moyens de synthèse vocale est sélectionnée en fonction de l'enregistrement numérique comprenant la pluralité de valeurs du paramètre d'affichage associées à ce dispositif électronique afficheur d'image dans la base de données afficheur et au moins une valeur d'un paramètre d'évaluation du profil visuel et oculomoteur associée à cet utilisateur dans la base de données utilisateur, et/ou respectivement en fonction d'une valeur d'un paramètre associé à une configuration de vision de l'utilisateur dans la base de données utilisateur, en fonction d'une valeur associée à une propriété du contenu de cette image numérisée ou respectivement de ce texte numérisé, en fonction d'une valeur d'un paramètre associé à une activité de vision de l'utilisateur.

D'autres caractéristiques non limitatives et avantageuses de procédé de personnalisation d'un dispositif électronique afficheur d'image conforme à l'invention sont les suivantes :
- à l'étape c), chaque paramètre utilisé pour déterminer la valeur optimum du paramètre d'affichage est affecté d'un coefficient de pondération prédéterminé ;
- le dispositif électronique afficheur d'image comprend un écran de visualisation et est choisi de préférence parmi un téléviseur, un ordinateur, un terminal internet, un téléphone intelligent, une tablette numérique, une liseuse numérique, un assistant numérique personnel (PDA), un agrandisseur numérique, un télé-agrandisseur, une loupe électronique, un vidéo-projecteur.

Selon un mode de réalisation particulièrement avantageux, le dispositif électronique afficheur d'image comprend des lunettes informatives, de type monoculaire ou binoculaire, configurées pour former au moins une image virtuelle et le procédé de personnalisation comprend en outre une étape :
- d'adaptation d'au moins une valeur d'un paramètre de personnalisation de l'image virtuelle affichée par les lunettes informatives en fonction des lunettes ophtalmiques portées par cet utilisateur, en fonction des propriétés associées à l'image réelle de fond vue par l'utilisateur par transparence à travers les lunettes informatives, en fonction du contenu de l'image virtuelle affichée et/ou en fonction de l'éclairement ambiant, de manière à améliorer la perception du contenu de cette image virtuelle par l'utilisateur.

Selon un aspect particulier de ce mode de réalisation, le dispositif électronique afficheur d'image comprend des lunettes informatives de type binoculaire, configurées pour former une image virtuelle droite en direction de l'œil droit de l'utilisateur et une image virtuelle gauche en direction de l'œil gauche de l'utilisateur et le procédé de personnalisation comprend en outre une étape :
- d'adaptation d'au moins une valeur d'un paramètre de personnalisation de l'image virtuelle droite et/ou de l'image virtuelle gauche affichées par les lunettes informatives binoculaires en fonction du contenu de l'image virtuelle droite affichée et du contenu de l'image virtuelle gauche affichée de manière à permettre la fusion des images virtuelles droite et gauche perçues respectivement par l'œil droit et l'œil gauche de l'utilisateur.

Avantageusement, le au moins un paramètre d'affichage de valeur variable comprend un paramètre de grossissement d'image, de position de l'image, de contraste, de luminosité, de résolution graphique, de niveaux de gris ou de couleur.

L'invention propose également un dispositif électronique afficheur d'image ayant au moins un paramètre d'affichage de valeur variable, le dispositif étant adapté pour afficher une image et pour modifier l'image affichée en fonction de la valeur du paramètre d'affichage, le dispositif comprenant des moyens informatiques d'implémentation d'un procédé de personnalisation selon l'un quelconque des modes de réalisation décrits.

Avantageusement, le dispositif électronique afficheur d'image comprend des lunettes informatives de type monoculaire ou binoculaire, comprenant au moins un afficheur relié à une source d'image et configuré pour former au moins une image virtuelle devant l'œil d'un utilisateur portant ces lunettes informatives, lesdites lunettes informatives étant reliées à une interface de contrôle et à une base de données pour adapter au moins une valeur d'un paramètre de personnalisation de l'image virtuelle affichée en fonction des paramètres visuels et oculomoteurs de l'utilisateur portant ces lunettes informatives, des paramètres de configuration des lunettes ophtalmiques, des propriétés associées à l'image réelle de fond vue par l'utilisateur par transparence à travers les lunettes informatives, en fonction du contenu de l'image virtuelle affichée et/ou en fonction de l'éclairement ambiant, de manière à améliorer la perception du contenu de cette image virtuelle par l'utilisateur.

De façon particulièrement avantageuse, les lunettes informatives de type binoculaire comprennent un afficheur droit configuré pour former une image virtuelle droite en direction de l'œil droit de l'utilisateur et un afficheur gauche configuré pour former une image virtuelle gauche en direction de l'œil gauche de l'utilisateur, lesdites lunettes informatives étant reliées à une interface de contrôle et à une base de données pour adapter au moins une valeur d'un paramètre de personnalisation de l'image virtuelle droite et/ou de l'image virtuelle gauche affichées en fonction du contenu de l'image virtuelle droite affichée et du contenu de l'image virtuelle gauche affichée de manière à permettre la fusion des images virtuelles droite et gauche perçues respectivement par l'œil droit et l'œil gauche de l'utilisateur.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une vue d'un écran de visualisation d'un dispositif électronique afficheur d'image de type loupe électronique ;
- la figure 2 représente une vue de côté d'un système de télé-agrandisseur ;
- la figure 3 représente schématiquement un exemple de lunettes informatives ;
- la figure 4 représente schématiquement un système reliant une pluralité de dispositifs électroniques afficheurs d'images à une base de données de configuration ;
- la figure 5 représente un exemple de premier niveau de paramétrage d'un dispositif électronique d'affichage d'image en fonction des performances visuelles d'un utilisateur et des paramètres techniques du dispositif ;
- la figure 6 représente un schéma d'étapes d'un procédé de personnalisation des paramètres d'un dispositif électronique d'affichage d'image selon différents niveaux de personnalisation.

### Dispositifs électroniques afficheurs d'image

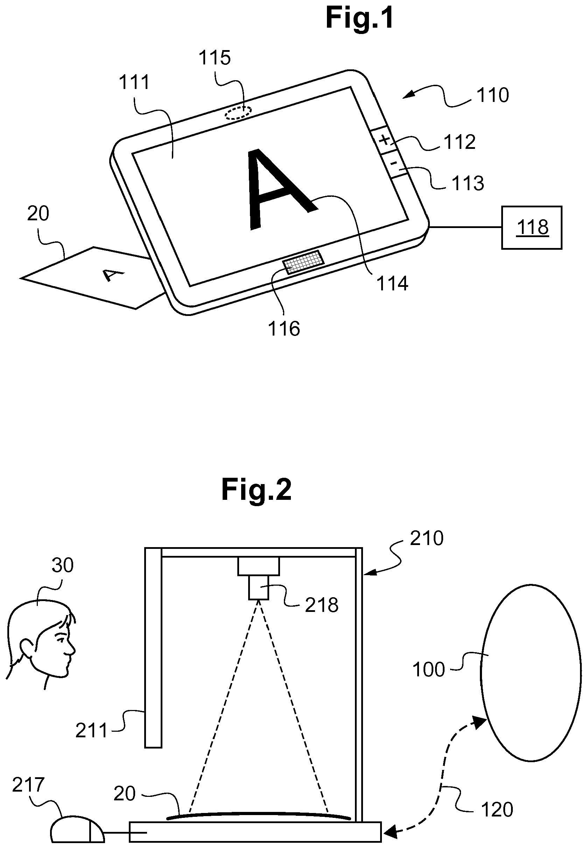

Sur la figure 1, on a représenté schématiquement un dispositif électronique afficheur d'image de type loupe électronique 110 selon un mode de réalisation de l'invention. La loupe électronique 110 comprend une caméra 115 intégrée qui permet de former une image numérisée d'un document réel, un écran de visualisation 111 et des boutons 112, 113 permettant de modifier la valeur de certains paramètres d'affichage. Avantageusement, la loupe électronique 110 comporte un microphone 116 qui permet de configurer le paramétrage de cette loupe électronique par commande vocale. Accessoirement, la loupe électronique comprend une interface de commande 118 permettant de configurer le paramétrage pour un utilisateur.

Dans un menu de configuration, l'utilisateur peut sélectionner un paramètre dont il souhaite ajuster la valeur. A titre d'exemple, l'utilisateur souhaite lire une page de journal 20. Afin d'ajuster le grossissement de l'image affichée 114, l'utilisateur sélectionne le réglage du grossissement, par exemple par l'interface de commande 118 ou par commande vocale via le microphone 116. Sur un bord de l'écran sont disposés deux boutons, un bouton 112 ayant un marquage + et un autre bouton 113 un marquage -. En appuyant sur le bouton 112 marqué d'un signe +, l'utilisateur a la possibilité d'augmenter le grossissement de l'image 114 jusqu'à une valeur de grossissement maximum. En appuyant sur le bouton 113 marqué d'un signe -, l'utilisateur a la possibilité de réduire le grossissement de l'image 114 jusqu'à une valeur de grossissement minimum. De manière alternative aux boutons de réglage, l'utilisateur peut configurer la valeur du grossissement entièrement par commande vocale. L'utilisateur peut ainsi ajuster le grossissement à une valeur optimum pour la lecture à l'écran d'une page de journal avec le confort visuel optimum en fonction de son acuité visuelle. La valeur optimum est comprise dans la gamme de valeurs de grossissement disponibles pour cette loupe électronique. Pour la lecture d'un autre support, tel qu'un livre ayant une taille de caractères imprimés différente de celle de la page de journal, une autre valeur de grossissement peut être préférable pour ce même utilisateur et cette même loupe électronique. De manière analogue, l'utilisateur peut ainsi ajuster la valeur d'autres paramètres de configuration, tels que le contraste, les couleurs affichées, la luminosité de l'écran, etc. Ces différentes valeurs de paramétrage associées à différentes activités de vision sont enregistrées dans une base de données située dans une mémoire de la loupe électronique ou sur un serveur informatique à distance. La base de données enregistre aussi les paramètres relatifs au profil visuel et oculomoteur de l'utilisateur 30. Chaque paramétrage est associé à une commande qui peut être sélectionnée via une des interfaces utilisateur, par exemple sous forme d'une commande vocale « lecture du journal », « lecture d'un livre », « image » etc. Lors d'une utilisation ultérieure, le paramétrage associé à une activité d'un utilisateur identifié est ainsi rappelé et appliqué facilement.

Sur la figure 2, on a représenté schématiquement un autre dispositif électronique afficheur d'image constitué d'un agrandisseur d'image 210. L'agrandisseur d'image 210 comprend une caméra 218, un écran de visualisation 211 et une interface de commande, par exemple une souris d'ordinateur 217. L'agrandisseur d'image 210 est relié à une base de données utilisateur et système 100 par une liaison de télécommunication 120 filaire ou sans fil. Un document 20 que l'utilisateur 30 souhaite visualiser ou lire est disposé face à la caméra 218. La caméra 218 forme une image numérisée du document 20. Le système agrandisseur d'image 210 affiche sur l'écran 211 au moins une partie agrandie de l'image numérisée par la caméra 218. L'utilisateur 30 peut modifier la configuration du système agrandisseur d'image 210 en utilisant une interface utilisateur, telle que par exemple une souris 217 ou un système de commande vocale. Le dispositif 210 peut être configuré pour permettre de numériser un texte en utilisant par exemple un système optique de reconnaissance des caractères (OCR). Avantageusement, le système agrandisseur d'image 210 comprend un moyen de synthèse vocale qui permet de synthétiser la lecture à voix haute d'un texte numérisé. La base de données utilisateur et système 100 permet d'enregistrer les paramètres relatifs au profil visuel et oculomoteur de l'utilisateur 30 et relatifs à une ou plusieurs configurations de l'agrandisseur d'image 210. Par exemple, la base de données 100 permet de stocker une première configuration pour la lecture d'un texte numérisé à l'écran, avec un grossissement, un contraste, des couleurs de texte et de fond déterminées. Par exemple, la base de données permet de stocker une autre configuration dans laquelle, si le contraste, le grossissement ou d'autres paramètres sont incompatibles avec les performances visuelles ou oculomotrices de l'utilisateur, l'activation de la synthèse vocale d'un texte numérisé se déclenche automatiquement.

Avantageusement, dans le cas où la base de données utilisateur 100 à distance contient déjà les valeurs personnelles du profil visuel et oculomoteur de l'utilisateur lors de la mise en marche du télé-agrandisseur, le dispositif calcule automatiquement les valeurs optimales des paramètres du dispositif agrandisseur d'images. Ce stockage de données à distance sur un serveur informatique évite de refaire les tests de performances visuelles de l'utilisateur lors de l'initialisation de chaque dispositif électronique afficheur d'image.

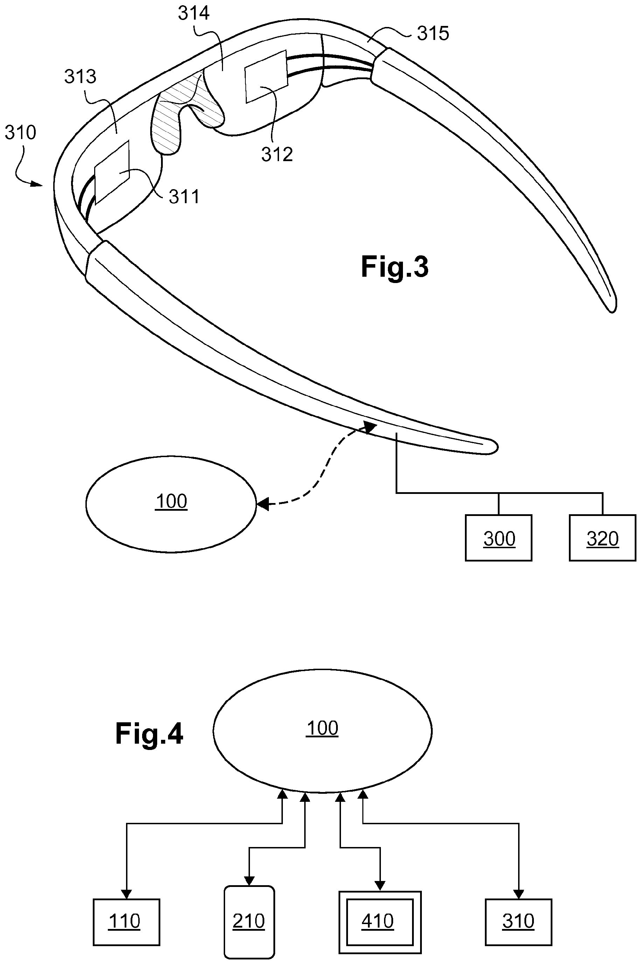

Sur la figure 3, on a représenté schématiquement un autre dispositif électronique afficheur d'image 310 du type lunettes informatives. On connaît des lunettes informatives comprenant un afficheur destiné à être monté sur une monture de lunettes pour projeter une image virtuelle en direction d'un des yeux du porteur de lunettes, comme décrit par exemple dans le document de brevet EP1960821 ou son équivalent US2009146916. On connaît aussi des lunettes informatives de type binoculaire comprenant un afficheur gauche 311 disposé face à l'œil gauche de l'utilisateur et un afficheur droit 312 disposé face à l'œil droit de l'utilisateur. Ces lunettes informatives binoculaires permettent la visualisation d'images stéréoscopiques d'un contenu réel ou virtuel en trois dimensions. Des lunettes informatives pour la vision stéréoscopique sont par exemple décrites dans le document de brevet EP2070338 ou son équivalent US2011102558.

Les lunettes informatives 310 sont reliées à une source d'images 300 que l'on souhaite afficher. Les lunettes informatives comportent généralement une interface de contrôle 320 pour ajuster en particulier le contraste et la luminosité de l'image ou des images affichées. Un afficheur pour verre ophtalmique 311, 312 peut être fixé sur une monture de lunettes comprenant une lentille gauche 313 et une lentille droite 314. Les lentilles 313, 314 peuvent être formées de lentilles de compensation ophtalmique et/ou de verres photochromiques. Les lunettes informatives 310 permettent d'afficher une image réelle ou virtuelle stéréoscopique au moyen des afficheurs 313, 314 en superposition avec l'image de fond formée par les lentilles 313 et 314.

Toutefois, selon l'environnement de l'utilisateur, les conditions de vision de l'image affichée par les lunettes informatives 310 peuvent varier fortement. On entend ici par paramètre environnemental tout paramètre susceptible de modifier la perception visuelle d'une image affichée qui ne dépend ni de l'utilisateur, ni du dispositif afficheur d'image, tel que par exemple la luminosité ambiante qui peut varier d'une très faible luminosité de type pénombre à une très forte luminosité par exemple en extérieur de jour. Par exemple, en cas de luminosité ambiante forte, le contraste de l'image affichée par les afficheurs des lunettes informatives peut être considérablement réduit, comparé au contraste de la même image dans un environnement de pénombre. D'autre part, dans le cas où l'utilisateur porte des verres photochromiques, le contraste d'une même image affichée via le(s) afficheur(s) 311, 312 varie selon la luminosité ambiante, qui modifie le coefficient de transmission des verres photochromiques. Ces variations de contraste de l'image affichée par les afficheurs 311, 312 peuvent gêner la vision de l'utilisateur ou empêcher la fusion des images gauche et droite.

Les lunettes informatives 310 sont reliées à une base de données 100 comprenant des paramètres relatifs au profil visuel et oculomoteur de l'utilisateur et des paramètres de configuration des lunettes informatives. Avantageusement, les lunettes informatives comprennent aussi un capteur de luminosité ambiante. Ce capteur permet de transmettre une mesure de luminosité ambiante à la base de données. Le système informatique des lunettes informatives permet de prendre en compte les variations de luminosité ambiante provenant du capteur pour adapter au mieux les paramètres d'affichage de l'image, tels que le contraste, les couleurs, la luminosité de l'image.

Sur la figure 4, on a représenté schématiquement une pluralité de dispositifs électroniques afficheurs d'image, tels que par exemple une loupe électronique 110, un télé-agrandisseur 210, des lunettes informatives 310 ou encore une tablette informatique, un téléphone intelligent, un écran de télévision 410 ... Les dispositifs électroniques afficheur d'image sont tous reliés à une même base de données 100 comprenant des paramètres relatifs au profil visuel et oculomoteur d'un utilisateur 30 et des paramètres de configuration de chacun des dispositifs électroniques afficheur d'image. Le système représenté sur la figure 4 permet de stocker de manière unique les paramètres relatifs au profil visuel et oculomoteur d'un utilisateur identifié. Les valeurs des paramètres du profil visuel et oculomoteur d'un utilisateur peuvent être déterminées par un procédé de test, comme détaillé ci-dessous, sur l'un des dispositifs électroniques afficheurs d'image, par exemple le télé-agrandisseur 210. Les valeurs des paramètres du profil visuel et oculomoteur ainsi déterminées pour un utilisateur sont ensuite stockées dans la base de données 100 et peuvent être utilisées pour adapter la configuration de n'importe quel autre dispositif électronique afficheur d'image utilisé par cet utilisateur et relié à la base de données 100. Ce système évite de dupliquer les bases de données et permet une mise à jour centralisée des données relatives à un utilisateur précis.

### Procédé de personnalisation de dispositifs afficheurs d'image

Un des buts du procédé de personnalisation de l'invention est d'automatiser le paramétrage d'un dispositif électronique afficheur d'image aux besoins d'un utilisateur. Le paramétrage est ainsi réalisé plus rapidement que manuellement.

Plus précisément, un des buts de l'invention est d'adapter automatiquement les valeurs des paramètres techniques de l'afficheur en fonction :
- des capacités ou performances visuelles de l'utilisateur pour favoriser un confort visuel optimisé ;
- des conditions d'utilisation de l'appareil, telles que la distance, l'ergonomie de l'utilisateur, la luminance ambiante ; et/ou
- du type de support et du contenu informatif que l'utilisateur souhaite visionner ou lire (taille de texte différente, police différente, contraste différent, ....) selon son activité.

Différents niveaux de paramétrage sont possibles. De manière simplifiée, on présente ici en détail trois niveaux de paramétrage de précision croissante.

À un premier niveau, le paramétrage résulte d'un traitement des données basé entièrement sur la détermination des capacités visuelles du sujet et sur les paramètres du dispositif électronique afficheur d'image. Ce traitement de premier niveau permet ainsi d'adapter le paramétrage du dispositif en fonction des capacités visuelles d'un utilisateur.

À un deuxième niveau, le paramétrage résulte d'un traitement des données basé non seulement sur la détermination des capacités visuelles du sujet et sur les paramètres du dispositif électronique afficheur d'image, c'est-à-dire le traitement de premier niveau, mais également sur les conditions d'utilisation et/ou les exigences relatives à l'activité du sujet. Ce traitement de deuxième niveau permet d'adapter plus précisément le paramétrage de l'affichage à l'environnement ou à l'activité d'un utilisateur.

À un troisième niveau, le paramétrage résulte d'un traitement des données qui prend en compte le traitement de deuxième niveau et qui est adaptable automatiquement en fonction des variations de conditions d'utilisation ou d'une optimisation des performances visuelles souhaitées par le sujet, liée par exemple à une exigence spécifique de son activité. Ce paramétrage de troisième niveau permet d'affiner la performance visuelle en adaptant les valeurs de paramétrage, de préférence en temps réel.

À chaque niveau de traitement, une validation du paramétrage du dispositif électronique afficheur d'image est proposée au sujet pour valider le choix de valeur(s) du paramétrage ou activer une remise en boucle du système. La remise en boucle du système peut impliquer d'intégrer un niveau n+1 pour affiner la qualité de traitement d'image selon d'autres paramètres.

### Paramétrage de premier niveau

Nous allons maintenant détailler un exemple de réalisation d'un paramétrage de premier niveau.

Au premier niveau, le procédé de personnalisation repose sur l'implémentation d'un ensemble de tests et de mesures permettant de :
- déterminer les capacités visuelles de l'utilisateur,
- déterminer les paramètres techniques du dispositif afficheur d'image (ou Display) : écran de téléphone, tablette, ordinateur, TV, vidéo projecteur... ;
- d'enregistrer et implémenter l'ensemble des données relatives à l'utilisateur et au dispositif dans une base de données, préférentiellement sur un serveur.

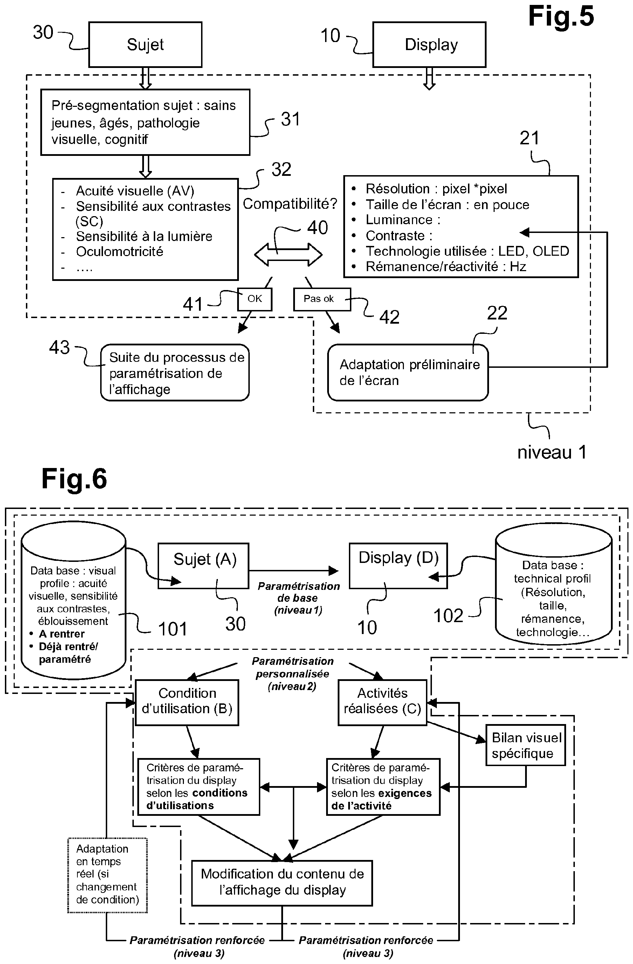

La figure 5 représente schématiquement un exemple de traitement de premier niveau. Dans cet exemple, le procédé de personnalisation a pour objectif de déterminer les paramètres techniques, l'état et/ou les performances initiales d'un afficheur d'image 10 afin de déterminer un seuil d'alerte d'utilisation de cet afficheur d'image. Cette étape permet non seulement d'afficher une image que l'utilisateur 30 souhaite percevoir mais également d'évaluer les performances de l'utilisateur 30 lors de l'utilisation de cet afficheur d'image.

### Paramètre(s) d'affichage du dispositif électronique afficheur d'image

Tout d'abord, à l'étape 21, on détermine l'ensemble des paramètres techniques qui décrivent le dispositif électronique afficheur d'image 10, notamment la résolution graphique, les dimensions (par exemple en nombre de pixels), la luminance, le contraste, la technologie utilisée (LED, OLED ce qui impacte l'angle de vue), la colorimétrie, la rémanence ou réactivité qui impacte la fréquence le rafraîchissement de l'image affichée.

### Enregistrement du paramétrage de l'afficheur d'image

De préférence, on enregistre dans une base de données 100 les différents paramètres caractérisant le dispositif électronique afficheur d'image 10, ainsi que la gamme de valeurs accessibles pour chacun de ces paramètres pour un dispositif électronique afficheur d'image particulier et la valeur courante de chaque paramètre pour ce dispositif 10.

Dans un mode de réalisation, la base de données de paramétrage 100 est enregistrée dans une mémoire du dispositif électronique afficheur d'image lui-même. Cette base de données est ainsi accessible localement. Accessoirement, un autre dispositif 110, 210, 310, 410... relié à cette mémoire peut aussi accéder à cette base de données de paramétrage 100.

De façon particulièrement avantageuse, dans un autre mode de réalisation, on enregistre dans une base de données 100 sur un serveur à distance, l'ensemble des paramètres de chacun des dispositifs électroniques afficheur d'image 10, 110, 210, 310, 410 etc. utilisés par un utilisateur 30 déterminé. La base de données de paramétrage 100 est par exemple enregistrée sur un serveur informatique ou sur un nuage informatique (cloud). De préférence, les données enregistrées dans la base de données de paramétrage sont accessibles en temps réel par n'importe lequel des dispositifs électroniques afficheur d'image 10, 110, 210, 310, 410 que souhaite utiliser un utilisateur 30.

### Évaluation du profil visuel et oculomoteur d'un utilisateur

On entend par profil visuel et oculomoteur d'un utilisateur, l'ensemble des valeurs de paramètres définissant la vision d'un utilisateur.

Le profil visuel et oculomoteur comprend par exemple une mesure d'acuité visuelle en vision de près, de loin, une prescription de lentilles ophtalmologiques, comprenant des mesures de sphère, cylindre et axe pour chaque œil de l'utilisateur.

L'utilisateur peut avoir une vision saine ou pathologique. L'utilisateur peut être une personne déficiente visuelle. Dans le cas d'une pathologie visuelle, les performances visuelles peuvent être très dégradées en termes d'acuité visuelle, de sensibilité aux contrastes, et/ou d'étendue spatiale du champ de vison. Le besoin de rehaussement de vision est d'autant plus important.

### Exemple de détermination des performances visuelles et oculo-motrices du sujet

Avantageusement, comme représenté sur la figure 2, l'évaluation du profil visuel et oculomoteur d'un sujet 30 est réalisée par l'enchaînement interactif de tests d'évaluation des performances visuelles du sujet 30 et d'évaluation des préférences subjectives du sujet 30.

Au préalable, à l'étape 31, on rentre dans une base de données, le profil général du sujet suivant une segmentation des utilisateurs en fonction de critères tels que :
∘ Le sujet porte-t-il une réfraction : Rx
∘ Le sujet présente-t-il une pathologie particulière (menu : DMLA, Cataracte, Rétinite pigmentaire...)
∘ Age du sujet : <45 ans - 45-70ans - >70 ans
∘ Type d'activité privilégié : lecture, vidéo, photos...

Ensuite, à l'étape 32, le paramétrage vise à déterminer les performances visuelles du sujet selon différents critères.

Dans le présent document on entend par activité de vision de l'utilisateur, différents types d'activités liées à l'utilisation d'un dispositif afficheur d'image telles que les activités de lecture, de visionnage de vidéo, photos, films, consultation de pages internet...

Cette étape 32 peut être réalisée aussi bien sur un texte (reconnaissance de lettres, de mots) ou sur une image (reconnaissance de formes dans une image). Les paramètres du traitement d'image ou du traitement de texte varient en fonction du support affiché, selon qu'il s'agit d'un texte ou d'une image.

Cette étape 32 a pour but de déterminer différentes performances visuelles du sujet requises pour effectuer une tâche de lecture ou de reconnaissance d'image, en particulier : l'acuité visuelle, la sensibilité aux contrastes, la sensibilité à la lumière et/ou l'oculomotricité de l'utilisateur, comme détaillé ci-dessous.

Suite à cette étape 32, on sélectionne un algorithme de manière à optimiser la position, la taille, le contraste du texte ou de l'image affichée.

Dans l'exemple détaillé ci-dessous, on se place dans le cas du paramétrage développé pour un dispositif de visualisation pour la lecture d'un texte. L'étape 32 de détermination des performances visuelles du sujet consiste par exemple en un test ou en une série de tests.

### Exemple d'enchaînement de tests de performances visuelles et oculomotrices du sujet :

### Test d'acuité de visualisation de lettre

Le test d'acuité a pour objectif de déterminer la plus petite taille de caractère identifiable par le sujet pour une distance déterminée entre le sujet et le dispositif électronique afficheur d'image. A titre d'exemple, cette étape est réalisée en présentant sur l'image réelle ou virtuelle des lettres de taille variable suivant une progression logarithmique. Le sujet indique la plus petite taille de lettre lue, par exemple en cliquant sur une ligne de lettres. De préférence, les lettres sont choisies parmi les lettres de SLOAN et sont affichées avec un contraste de 100%.

La détermination de la plus petite taille de lettre lue par l'utilisateur au moyen du dispositif afficheur d'image correspond à une certaine acuité visuelle, à savoir une taille de lettre à afficher pour qu'elle soit perçue et identifiée. La taille de la lettre doit être optimisée (la plus petite confortable) pour donner au lecteur un empan visuel ou un champ visuel optimal. Plus la taille de la lettre est grande, plus le nombre de lettres visibles en un seul coup d'œil est faible. Un compromis entre la taille des lettres affichées et l'empan visuel permet de déterminer des conditions optimales de lecture pour un utilisateur.

### Test de contraste

Le test de contraste a pour objectif de déterminer la capacité du sujet à distinguer le plus petit contraste perceptible entre une lettre et le fond de l'image affichée. Cependant, il est connu que le seuil de contraste dépend de la taille de la lettre. La mesure du contraste est donc effectuée en utilisant la taille de la lettre optimale déterminée à l'étape précédente, pour obtenir la mesure de seuil de contraste la plus juste.

Par exemple, la mesure de contraste est effectuée en affichant des lettres de contraste décroissant. Si l'écran est de taille réduite et que toutes les lettres ne rentrent pas dans l'écran, cette étape est réalisée par un défilement des lettres. Le sujet indique, par exemple par un clic, le plus faible contraste perceptible confortablement. On note la valeur de ce seuil de contraste (en %). Le procédé de traitement est ensuite adapté en fonction de la valeur de ce seuil. Par exemple, pour une valeur de seuil de contraste inférieure à 5%, le traitement d'image ou traitement de texte permet de proposer aux lecteurs une inversion de contraste : par exemple l'affichage d'un texte en lettres blanches sur fond noir. Pour une valeur de seuil de contraste supérieure ou égale à 5%, le traitement d'image ou traitement de texte peut comporter une augmentation de contraste du texte pour rehausser le confort visuel.

### Test de police de caractères (préférences sujet)

Le test de police de caractères a pour objectif de sélectionner une police de caractères à afficher par exemple sur l'écran de visualisation. Selon les personnes, le confort visuel est meilleur si le texte est affiché en police de caractères de type Times ou Arial par exemple, ou en d'autres fontes. En effet, la visibilité de la lettre, le dessin de la lettre impacte la performance de lecture du sujet. En présence de certaines pathologies, le sujet peut préférer des caractères droits et non gothique. Par exemple, un sujet souffrant de dégénérescence maculaire liée à l'âge (DMLA), exploite plutôt les zones périphériques de la rétine qui présentent une moindre résolution que la zone centrale de la rétine. De ce fait, les sujets affectés de DMLA préfèrent généralement des caractères d'imprimerie droits plus simple à identifier par la zone périphérique de la rétine.

Par exemple, la sélection d'une police de caractères comprend l'affichage, dans quatre quadrants distincts, de lettres de la taille définie à l'étape 1, avec des polices différentes dans les différents quadrants (par exemple Arial, Times, Courrier,...). Le sujet sélectionne une police de caractères préférée en cliquant sur le quadrant correspondant.

### Test d'espacement des caractères (préférences sujet)

Le test d'espacement des caractères a pour objectif de déterminer l'espacement optimal entre les caractères pour faciliter la reconnaissance d'un texte. En présence d'une pathologie rétinienne, le sujet est confronté à une difficulté à distinguer des lettres proches les unes des autres (effet de crowding). Ce phénomène est accentué lorsqu'un sujet affecté d'une pathologie rétinienne telle que la DMLA, lit en utilisant la zone périphérique de la rétine.

Le test d'espacement des caractères comprend par exemple l'affichage de mots formés de lettres ayant la taille déterminée au cours du test d'acuité de visualisation de lettre, avec la police de caractères et le contraste sélectionnés précédemment et avec un espacement variable, par exemple un espacement simple, double et triple. Le sujet sélectionne la disposition de lettre qui lui est la plus favorable.

Le traitement de texte applique ensuite l'espacement entre caractères ainsi sélectionné pour optimiser la disposition spatiale des caractères du texte affiché.

### Test d'acuité de lecture

Le test d'acuité de lecture a pour objectif d'évaluer un paramètre de lecture, tel que la vitesse de lecture d'un texte.

La reconnaissance de lettres ou de mots isolés n'exige pas les mêmes performances visuelles que la lecture de phrases. Lors d'une lecture continue, il est important d'avoir une bonne capacité d'identification de la lettre (étapes précédentes maximisant la visibilité de la lettre). Lors de la lecture, les yeux effectuent des mouvements rapides d'exploration du texte. Il est donc également important d'avoir un bon contrôle oculomoteur pour explorer continuellement et sans fatigue tous les éléments du texte. Il est fréquent que le sujet éprouve une fatigue lors de la lecture, du fait de difficultés à bouger efficacement les yeux, liées à des efforts musculaires ou à une modification du contrôle oculomoteur en présence de pathologie rétinienne. L'objectif de ce test est alors d'affiner la taille de lettre à afficher lors d'un test de lecture de phrase, en gardant les paramètres des lettres définis précédemment.

Le test d'acuité de lecture comprend par exemple l'affichage de phrases de longueurs pré-calibrées et la mesure de la vitesse de lecture du sujet. On commence avec une taille de lettre de pas supérieur à l'acuité de lettre pour donner une aisance de lecture au sujet. Le début de la lecture et la fin de la lecture est noté, par exemple via un clic sur l'écran. Une vitesse de lecture est calculée (nombre de mots lus par minute). On diminue progressivement la taille des lettres des phrases affichées suivant un pas logarithmique pour évaluer à chaque fois la vitesse de lecture de phrase. La vitesse de lecture baisse généralement lorsque la taille des lettres affichées devient trop petite ou difficile à lire. On définit la taille de la lettre optimale pour la lecture comme étant la taille de lettres correspondant à la plus grande vitesse de lecture. On peut aussi définir un seuil en % à partir duquel on considère qu'il y a une baisse de la vitesse de lecture.

### Test du mode d'affichage (préférences sujet)

Le test du mode d'affichage a pour objectif de déterminer la disposition spatiale des mots optimale, par exemple parmi une disposition en colonne, en ligne, ou mot à mot. En effet, le mode d'affichage peut affecter le confort visuel et l'endurance de lecture d'un sujet. Il est possible de faciliter la lecture en affichant tout le texte sur une seule colonne, ou sur une seule ligne pour éviter les retours à la ligne ou encore mot par mot dans le cas de déficience visuelle importante.

Le choix de la disposition des mots permet de réduire le bruit du document à lire. Un document affiché contenant une grande quantité d'informations peut provoquer une perte de repères si trop d'éléments sont affichés en même temps. Le choix d'une disposition particulière permet de gagner en endurance et réduire la fatigue visuelle du sujet.

La détermination du mode d'affichage comprend par exemple l'affichage de différents modes d'affichages, respectivement en colonnes, en lignes, en mots isolés. Le sujet choisit le mode d'affichage en colonne, en ligne, ou en mots qui lui convient le mieux, par exemple en cliquant sur la disposition correspondante

De manière alternative, un algorithme peut proposer un mode d'affichage en fonction de l'acuité de lecture déterminée au préalable. Par exemple, si le patient a besoin d'une grande taille de lettre, il est préférable de restructurer la disposition du texte en ligne ou mots. Le mode d'affichage optimal peut être déterminé en fonction d'un seuil limite d'acuité visuelle à prédéterminé pour activer ce mode.

A la fin de chaque test, le résultat du test est de préférence enregistré dans la base de données utilisateur.

D'autres tests complémentaires tels qu'un test d'activation de synthèse vocale, un test d'éblouissement ou un test d'oculomotricité peuvent également être implémentés sur le dispositif électronique afficheur d'image.

### Comparaison du profil visuel aux paramètres du dispositif afficheur

Dans le mode de réalisation illustré sur la figure 5, à l'issue des étapes 31 et 32 de détermination du profil visuel et oculo-moteur de l'utilisateur et à l'issue de l'étape 21 de détermination des paramètres du dispositif afficheur d'image, le système informatique permet à l'étape 40 de vérifier que l'on peut utiliser l'afficheur d'image 10 pour déterminer efficacement les performances visuelles de l'utilisateur 30 après une initialisation du profil visuel du porteur.

Le tableau suivant indique des liens entre les paramètres du dispositif afficheur d'image et les fonctions visuelles d'un utilisateur.

**Tableau 1 : Lien entre certains paramètres d'un dispositif afficheur d'image et différentes fonctions visuelles**

| Paramètres du dispositif afficheur d'image | Fonction visuelle liée |
|---|---|
| Résolution | Impact sur la taille des lettres visibles par l'œil sur un texte affiché ou sur le plus petit détail perceptible d'une image affichée |
| Taille | Impact sur l'empan visuel du sujet (taille du champ visible en une seule fixation). Paramètre à corréler avec la taille des lettres. Plus la taille des lettres est grande, plus l'empan visuel est petit. Si l'écran est petit, l'empan visuel sera très réduit, la performance visuelle également |
| Luminance | A mettre en lien avec la sensibilité à la lumière du sujet. |
| Contraste | A mettre en lien avec la sensibilité aux contrastes du sujet. Une faible sensibilité aux contrastes du sujet implique un rehaussement du contraste de l'image afin de rendre la performance visuelle optimale (moins de fatigue, meilleure identification) |
| Technologie : LED, OLED | Impact sur la colorimétrie de l'image : selon l'angle de vue du sujet, la perception de l'image colorée est différente. Impact aussi sur la qualité de l'image selon l'activité, surtout dans le cas de la perception d'une image, d'une vidéo. |
| Rémanence / réactivité | Stabilisation de l'image si le dispositif afficheur d'image bouge rapidement selon la fréquence de rémanence de l'appareil |

Par exemple, une mesure d'acuité permet de déterminer la plus petite taille de lettre que l'utilisateur peut visualiser sur l'écran. Si la taille de l'écran est réduite et que la résolution de l'écran est faible, on ne peut pas visualiser des tailles de lettres inférieures à une taille minimum définie par les paramètres techniques de l'écran correspondant à une certaine acuité visuelle. Il suffit pour cela de définir des plages de performance selon le profil de l'utilisateur.

Si l'état initial du dispositif électronique afficheur d'image n'est pas adapté pour effectuer les mesures, deux possibilités se présentent à l'étape 22 :
- déterminer le(s) paramètre(s) du dispositif afficheur à réajuster/piloter pour l'(les) adapter au profil personnalisé du porteur, ou
- informer l'utilisateur des limites technologiques de l'afficheur d'image et mettre en place un module simplifié.

Cet exemple de réalisation permet de déterminer la manière de piloter le dispositif électronique afficheur d'image.

### Validation et utilisation du paramétrage de premier niveau

A l'étape 41, on valide l'enregistrement des paramètres relatifs au profil visuel et oculomoteur de l'utilisateur et des paramètres relatifs au dispositif électronique afficheur d'image qui conviennent pour l'activité envisagée sur le dispositif en fonction des performances de vision déterminées.

On peut ensuite terminer le paramétrage ou poursuivre le paramétrage par exemple par un paramétrage de niveau supérieur plus précis.

Un système de contrôle embarqué sur le dispositif ou situé à distance permet de piloter le paramétrage d'un dispositif afin d'adapter au mieux le contenu de l'image affichée. De façon avantageuse, un unique système de contrôle à distance permet de piloter le paramétrage de plusieurs dispositifs électroniques afficheurs d'image enregistrés en fonction des capacités visuelles de l'utilisateur.

De façon encore plus avantageuse, le système de contrôle à distance permet de piloter le paramétrage de différents dispositifs électroniques afficheurs d'image, en fonction des conditions d'utilisations et des activités de l'utilisateur et des paramètres physiques de chaque dispositif électronique afficheur d'image.

### Paramétrage de deuxième niveau

La figure 6 représente schématiquement un exemple de traitement multi-niveaux.

Le premier niveau le paramétrage permet, comme détaillé ci-dessus, de déterminer les performances visuelles et oculomotrices du sujet, enregistrées dans une base de données utilisateur 101 et les paramètres du dispositif électronique afficheur d'image, enregistrées dans une base de données afficheur 102. La base de données utilisateur 101 et la base de données afficheur 102 peuvent être regroupées dans une même base de données 100 centralisée sur un serveur ou être enregistrées et accessibles indépendamment l'une de l'autre.

Le deuxième niveau permet de prendre en compte de manière plus précise le profil visuel et oculomoteur de l'utilisateur en fonction des activités et/ou de l'environnement de l'utilisateur.

En effet, il est connu que les performances visuelles peuvent dépendre de l'activité (lecture, vision d'une image) et/ou de l'environnement (luminosité ambiante faible ou forte par exemple).

L'utilisateur peut avoir une vision saine ou pathologique. Plus précisément, l'utilisateur peut avoir une vision sans défaut majeur permanent mais présentant une fatigue visuelle dans certaines conditions ou pour certaines applications, par exemple pour la lecture en vision de près uniquement. Dans le cas d'une pathologie de vision, les conditions d'utilisation (durée d'utilisation, type d'activité, environnement lumineux) peuvent altérer les performances visuelles.

Au deuxième niveau, le procédé de personnalisation comporte en outre l'implémentation d'un ensemble de tests et de mesures permettant de :
- déterminer les conditions d'utilisations du dispositif par l'utilisateur, telles que :
   ▪ la distance de vision,
   ▪ la luminosité ambiante,
   ▪ la position statique ou en mouvement de l'utilisateur ;
- déterminer les activités souhaitées par l'utilisateur, telles que :
   ▪ le type d'images à identifier (texte/image, vidéo...),
   ▪ des exigences de performances associées à l'activité telles que la précision ou l'endurance.

### Etape 1 : Détermination des conditions d'utilisations du dispositif afficheur d'image par le sujet

Pour cela, on détermine de préférence :
- la position, la posture et l'ergonomie du sujet.

Avantageusement, le sujet est équipé d'une paire de lunettes munie de lentilles ophtalmiques correspondant à une prescription Rx, de type sphère, cylindre, axe.

De façon particulièrement avantageuse, le sujet est également muni de capteurs adaptés pour déterminer la distance entre le sujet et un écran de visualisation (par exemple des capteurs infrarouges adaptés pour communiquer entre l'appareil et les lunettes portées par le sujet). Il est fréquent que les distances d'utilisation soient différentes pour un smartphone et une tablette numérique. La détermination de cette distance de visualisation permet ensuite d'adapter la taille des lettres d'un texte ou d'une image affichée pour maintenir une acuité visuelle optimale pour l'utilisateur, quelle que soit la distance de lecture ou de visualisation.

A cet effet, la taille des lettres à afficher peut également varier en fonction de la détermination de la position de tête, correspondant à une lecture en position debout, assis ou allongé par exemple.

Dans un mode de réalisation d'un traitement de troisième niveau, le procédé comprend en outre les étapes suivantes pour déterminer :
- la position du regard par rapport à l'afficheur d'image de manière à asservir le traitement d'image selon la position du regard ;
- la position statique ou en mouvement du sujet au moyen d'un accéléromètre ;
- l'environnement dans lequel le sujet se trouve, par une mesure de la luminosité ambiante. Une intensité lumineuse trop élevée peut provoquer un éblouissement de l'utilisateur, tandis qu'une intensité lumineuse faible peut entraîner une vision mésopique. La mesure de l'intensité lumineuse peut permettre de piloter la luminance et le contraste de l'écran en fonction de la sensibilité de l'œil de l'utilisateur et de cette luminosité ambiante. La saillance de l'image peut être optimisée lorsque le sujet se trouve dans l'obscurité.
- une variation de luminosité ;
- une utilisation statique ou dynamique (locomotion).

### Étape 2 : Détermination de l'activité du sujet

Avantageusement, on propose au sujet de sélectionner par exemple dans une liste de menus déroulant une ou plusieurs activités possibles dans différentes catégories.

Un premier choix vise par exemple à déterminer, pour un dispositif afficheur d'image particulier, un type d'activité associé tel que : la lecture (longue, ponctuelle), l'écriture (SMS, mail), les jeux vidéo, le visionnage de films/TV, la consultation de pages internet, etc. En effet, il est connu que des performances visuelles sont sollicitées différemment en fonction du type d'activité. Le paramétrage de l'image peut ainsi prendre en compte l'activité envisagée.

Des exigences sont généralement associées à chaque type d'activité, tels que le niveau de concentration : haute, moyenne, basse, l'endurance selon la durée de l'activité, ou encore la performance en termes de vitesse de lecture ou de précision (par exemple pour la lecture de sms).

### Paramétrage de troisième niveau

Le troisième niveau permet de prendre en compte l'évolution du profil visuel et oculomoteur de l'utilisateur et/ou l'évolution des conditions d'utilisation.

Certains paramètres du profil visuel et oculomoteur de l'utilisateur peuvent être variables dans le temps. Ainsi, une pathologie visuelle peut être évolutive dans le temps. Par ailleurs, l'utilisateur peut ressentir une fatigue visuelle passagère en fonction de la durée d'utilisation.

D'autres paramètres dépendent des conditions d'utilisation ou des activités de l'utilisateur. Ainsi, dans le cas d'une vision saine, l'utilisateur peut avoir une acuité réduite dans certaines situations, par exemple de luminosité réduite ou au contraire de forte luminosité.

Dans le cas où un utilisateur est muni de lunettes informatives et se déplace, l'environnement peut varier et affecter la vision d'une image affichée, par exemple selon la couleur claire ou foncée du fond sur lequel l'image virtuelle produite par les lunettes informatives se superpose.

Dans un autre exemple de traitement de troisième niveau, un paramètre technique de l'image affichée correspond à la taille des caractères d'un texte qui peut être modifiée selon la distance de lecture de l'utilisateur pour être en permanence adaptée à son acuité visuelle.
De façon particulièrement avantageuse, un mode de réalisation de l'invention proposée permet ainsi d'adapter en temps réel l'image affichée pour donner une liberté et un confort visuel optimal de l'utilisateur quels que soient le dispositif électronique afficheur d'image, les conditions d'utilisations et la tâche visuelle.

Différents modes d'exécution de l'étape 32 sont envisagés. L'exécution de l'étape 32 peut être entièrement automatique, semi-automatique ou par itérations à chaque test.

Le procédé permet d'adapter automatiquement le paramétrage d'un ou de plusieurs dispositifs afficheur d'image en fonction des capacités visuelles de l'utilisateur, des paramètres de configuration de chaque dispositif afficheur d'image et éventuellement des conditions environnantes ou du contenu informatif de l'image ou du texte que l'on souhaite visualiser.

## Revendications

1. Procédé de personnalisation d'un dispositif électronique afficheur d'image (110, 210, 310, 410) ayant au moins un paramètre d'affichage de valeur variable, le dispositif étant adapté pour afficher une image (114) et pour modifier l'image affichée en fonction de la valeur du paramètre d'affichage, ledit procédé de personnalisation comportant l'adaptation de la valeur du paramètre d'affichage à un utilisateur (30) selon les étapes suivantes :
a3) déterminer par l'utilisateur une activité de vision de l'utilisateur pour la visualisation d'images, l'activité de vision étant sélectionnée parmi plusieurs activités de vision possibles telles que la lecture, l'écriture, les jeux vidéo, le visionnage de photos ou films pour la visualisation d'image et/ou la consultation de pages internet au moyen du dispositif électronique afficheur d'image ;
a) relier le dispositif électronique afficheur d'image (110, 210, 310, 410) à une base de données utilisateur (100, 101), déterminer et effectuer dans la base de données utilisateur (100, 101) un enregistrement numérique comprenant au moins une valeur d'un paramètre d'évaluation du profil visuel et oculomoteur de cet utilisateur (30), ladite au moins une valeur comprenant une mesure d'acuité visuelle de cet utilisateur (30), et au moins une valeur d'un paramètre associé à l'activité de vision déterminée à l'étape a3) ;
b) relier le dispositif électronique afficheur d'image (110, 210, 310, 410) à une base de données afficheur (100, 102) et effectuer, dans la base de données afficheur (100, 102), un enregistrement numérique comprenant une pluralité de valeurs du paramètre d'affichage associées au dispositif électronique afficheur d'image (110, 210, 310, 410) et à un identifiant de ce dispositif électronique afficheur d'image (110, 210, 310, 410), l'enregistrement numérique étant stocké dans un registre de la base de données afficheur (100, 102) comprenant une pluralité d'enregistrements numériques associés à une pluralité de dispositifs électroniques afficheur d'image (110, 210, 310, 410), chaque enregistrement d'un dispositif électronique afficheur d'image du registre étant associé à un identifiant unique ;
c) sélectionner, pour la visualisation par l'utilisateur (30) d'une image affichée par le dispositif électronique afficheur d'image (110, 210, 310, 410), une valeur optimum du paramètre d'affichage parmi la pluralité de valeurs de paramètres d'affichage de l'enregistrement numérique associées au dispositif électronique afficheur d'image (110, 210, 310, 410) dans la base de données afficheur (100, 102) en fonction de l'enregistrement numérique de ladite au moins une valeur de la mesure d'acuité visuelle associée à cet utilisateur dans la base de données utilisateur (100, 101) et en fonction de l'enregistrement numérique de ladite au moins une valeur d'un paramètre associé à l'activité de vision associés à cet utilisateur dans la base de données utilisateur ;
d) appliquer automatiquement la valeur optimum de ce paramètre d'affichage d'image au dispositif électronique afficheur d'image, de manière à améliorer la reconnaissance et/ou la lecture de l'image affichée et le confort visuel de l'utilisateur.

2. Procédé de personnalisation d'un dispositif électronique afficheur d'image selon la revendication 1 comprenant en outre les étapes suivantes :
a1) déterminer une configuration de vision de l'utilisateur (30) pour la visualisation d'images au moyen du dispositif électronique afficheur d'image (110, 210, 310, 410) ;
b1) enregistrer dans l'enregistrement numérique de la base de données utilisateur (100, 101) au moins une valeur d'un paramètre associé à une configuration de vision de l'utilisateur déterminée à l'étape a1) ; et
c1) sélectionner la valeur optimum du paramètre d'affichage parmi la pluralité de valeurs de paramètres d'affichage associées au dispositif électronique afficheur d'image en fonction aussi de l'enregistrement numérique de la au moins une valeur d'un paramètre de configuration de vision associée à cet utilisateur dans la base de données utilisateur (100, 101).

3. Procédé de personnalisation d'un dispositif électronique afficheur d'image selon la revendication 1 comprenant en outre les étapes suivantes :
a2) recevoir une image numérisée ou un texte numérisé à afficher sur le dispositif électronique afficheur d'image (110, 210, 310, 410) et extraire au moins une propriété du contenu de cette image numérisée ou respectivement de ce texte numérisé ;
b2) enregistrer dans l'enregistrement numérique de la base de données utilisateur (100, 101) au moins une valeur associée à une propriété du contenu de cette image numérisée ou respectivement de ce texte numérisé ;
c2) sélectionner la valeur optimum du paramètre d'affichage parmi la pluralité de valeurs de paramètres d'affichage associées au dispositif électronique afficheur d'image en fonction de l'enregistrement numérique de la au moins une valeur associée à une propriété du contenu de cette image numérisée ou respectivement de ce texte numérisé.

4. Procédé de personnalisation d'un dispositif électronique afficheur d'image selon l'une des revendications 1 à 3 dans lequel l'étape a) pour déterminer au moins une valeur d'un paramètre d'évaluation du profil visuel et oculomoteur de cet utilisateur comprend l'étape a4) suivante :
a4) afficher séquentiellement, au moyen du dispositif électronique afficheur (110, 210, 310, 410), une image de test suivant une pluralité de valeurs de grossissement d'image et recevoir un signal de l'utilisateur (30) de manière à déterminer une valeur de grossissement d'image minimum pour cet utilisateur (30) ;
et le procédé de personnalisation comprenant en outre les étapes suivantes :
b4) enregistrer, dans l'enregistrement numérique de la base de données utilisateur (100, 101) et de la base de données afficheur (100, 102), la valeur de grossissement minimum associée à ce dispositif électronique afficheur d'image (110, 210, 310, 410) et à cet utilisateur (30);
d4) configurer le dispositif électronique afficheur d'image (110, 210, 310, 410) de manière à utiliser un grossissement supérieur ou égal à la valeur de grossissement d'image minimum.

5. Procédé de personnalisation d'un dispositif électronique afficheur d'image selon l'une des revendications 1 à 4 dans lequel le dispositif électronique afficheur d'image comporte un capteur adapté pour mesurer un paramètre environnemental, le procédé comportant les étapes :
a5) mesurer au moyen du capteur au moins une valeur du paramètre environnemental associée au dispositif électronique afficheur d'image (110, 210, 310, 410) et/ou à l'utilisateur (30) ;
b5) enregistrer dans l'enregistrement numérique de la base de données utilisateur (100, 101) la mesure du paramètre environnemental ;
c5) sélectionner la valeur optimum du paramètre d'affichage en fonction de l'enregistrement numérique de la mesure du paramètre environnemental.

6. Procédé de personnalisation d'un dispositif électronique afficheur d'image selon l'une des revendications 1 à 5 dans lequel le dispositif électronique afficheur d'image (110, 210, 310, 410) comporte des moyens de synthèse vocale et dans lequel l'activation des moyens de synthèse vocale est sélectionnée en fonction de l'enregistrement numérique comprenant la pluralité de valeurs du paramètre d'affichage associées à ce dispositif électronique afficheur d'image dans la base de données afficheur (100, 102) et au moins une valeur d'un paramètre d'évaluation du profil visuel et oculomoteur associée à cet utilisateur dans la base de données utilisateur (100, 101), et/ou respectivement en fonction d'une valeur d'un paramètre associé à une configuration de vision de l'utilisateur dans la base de données utilisateur (100, 101), en fonction d'une valeur associée à une propriété du contenu de cette image numérisée ou respectivement de ce texte numérisé, en fonction d'une valeur d'un paramètre associé à une activité de vision de l'utilisateur.

7. Procédé de personnalisation d'un dispositif électronique afficheur d'image selon l'une des revendications 1 à 6 dans lequel lors de lequel à l'étape c), chaque paramètre utilisé pour déterminer la valeur optimum du paramètre d'affichage est affecté d'un coefficient de pondération prédéterminé.

8. Procédé de personnalisation d'un dispositif électronique afficheur d'image selon l'une des revendications 1 à 7 dans lequel le dispositif électronique afficheur d'image (110, 210, 310, 410) comprend un écran de visualisation (111, 211, 311, 312) et est choisi de préférence parmi un téléviseur, un ordinateur, un terminal internet, un téléphone intelligent, une tablette numérique, une liseuse numérique, un assistant numérique personnel (PDA), un agrandisseur numérique, un télé-agrandisseur, une loupe électronique, un vidéo-projecteur.

9. Procédé de personnalisation d'un dispositif électronique afficheur d'image selon l'une des revendications 1 à 7 dans lequel le dispositif électronique afficheur d'image (110, 210, 310, 410) comprend des lunettes informatives (310), de type monoculaire ou binoculaire, configurées pour former au moins une image virtuelle et en ce que le procédé de personnalisation comprend en outre une étape :
- d'adaptation d'au moins une valeur d'un paramètre de personnalisation de l'image virtuelle affichée par les lunettes informatives (310) en fonction des lunettes ophtalmiques portées par cet utilisateur, en fonction des propriétés associées à l'image réelle de fond vue par l'utilisateur par transparence à travers les lunettes informatives, en fonction du contenu de l'image virtuelle affichée et/ou en fonction de l'éclairement ambiant, de manière à améliorer la perception du contenu de cette image virtuelle par l'utilisateur.

10. Procédé de personnalisation d'un dispositif électronique afficheur d'image selon l'une des revendications 1 à 7 ou 9, dans lequel le dispositif électronique afficheur d'image comprend des lunettes informatives (310) de type binoculaire, configurées pour former une image virtuelle droite en direction de l'œil droit de l'utilisateur et une image virtuelle gauche en direction de l'œil gauche de l'utilisateur et en ce que le procédé de personnalisation comprend en outre une étape :
- d'adaptation d'au moins une valeur d'un paramètre de personnalisation de l'image virtuelle droite et/ou de l'image virtuelle gauche affichées par les lunettes informatives binoculaires en fonction du contenu de l'image virtuelle droite affichée et du contenu de l'image virtuelle gauche affichée de manière à permettre la fusion des images virtuelles droite et gauche perçues respectivement par l'œil droit et l'œil gauche de l'utilisateur.

11. Procédé de personnalisation d'un dispositif électronique afficheur d'image selon l'une des revendications 1 à 10 dans lequel le au moins un paramètre d'affichage de valeur variable comprend un paramètre de grossissement d'image, de position de l'image, de contraste, de luminosité, de résolution graphique, de niveaux de gris ou de couleur.

12. Dispositif électronique afficheur d'image ayant au moins un paramètre d'affichage de valeur variable, le dispositif étant adapté pour afficher une image et pour modifier l'image affichée en fonction de la valeur du paramètre d'affichage, le dispositif comprenant des moyens informatiques d'implémentation d'un procédé de personnalisation selon l'une des revendications 1 à 11.

13. Dispositif électronique afficheur d'image selon la revendication 12, comprenant des lunettes informatives (310) de type monoculaire ou binoculaire, comprenant au moins un afficheur (311, 312) relié à une source d'image (300) et configuré pour former au moins une image virtuelle devant l'œil d'un utilisateur (30) portant ces lunettes informatives (310), lesdites lunettes informatives étant reliées à une interface de contrôle (320) et à une base de données (100) pour adapter au moins une valeur d'un paramètre de personnalisation de l'image virtuelle affichée en fonction des paramètres visuels et oculomoteurs de l'utilisateur portant ces lunettes informatives, des paramètres de configuration des lunettes ophtalmiques, des propriétés associées à l'image réelle de fond vue par l'utilisateur par transparence à travers les lunettes informatives, en fonction du contenu de l'image virtuelle affichée et/ou en fonction de l'éclairement ambiant, de manière à améliorer la perception du contenu de cette image virtuelle par l'utilisateur (30).

14. Dispositif électronique afficheur d'image selon la revendication 13, comprenant des lunettes informatives (310) de type binoculaire comprenant un afficheur droit (312) configuré pour former une image virtuelle droite en direction de l'œil droit de l'utilisateur et un afficheur gauche (311) configuré pour former une image virtuelle gauche en direction de l'œil gauche de l'utilisateur, lesdites lunettes informatives étant reliées à une interface de contrôle (320) et à une base de données (100) pour adapter au moins une valeur d'un paramètre de personnalisation de l'image virtuelle droite et/ou de l'image virtuelle gauche affichées en fonction du contenu de l'image virtuelle droite affichée et du contenu de l'image virtuelle gauche affichée de manière à permettre la fusion des images virtuelles droite et gauche perçues respectivement par l'œil droit et l'œil gauche de l'utilisateur.

## Patentansprüche

1. Verfahren zum individuellen Anpassen einer elektronischen Bildanzeigevorrichtung (110, 210, 310, 410), das mindestens einen Anzeigeparameter mit variablem Wert aufweist, wobei die Vorrichtung ausgebildet ist zum Anzeigen eines Bildes (114) und zum Ändern des angezeigten Bildes in Abhängigkeit von dem Wert des Anzeigeparameters, wobei das Verfahren zum individuellen Anpassen die Anpassung des Werts des Anzeigeparameters an einen Benutzer (30) entsprechend den folgenden Schritten aufweist:
a3) Bestimmen, durch den Benutzer, einer Sehtätigkeit des Benutzers für die Anzeige von Bildern, wobei die Sehtätigkeit aus mehreren möglichen Sehtätigkeiten ausgewählt wird, wie zum Beispiel Lesen, Schreiben, Videospiele, Betrachten von Fotos oder Filmen für die Bildanzeige und/oder Aufrufen von Internetseiten mithilfe der elektronischen Bildanzeigevorrichtung;
a) Verbinden der elektronischen Bildanzeigevorrichtung (110, 210, 310,410) mit einer Benutzerdatenbank (100, 101), Bestimmen und Durchführen eines digitalen Eintrags in der Benutzerdatenbank (100, 101), die mindestens einen Wert eines Bewertungsparameters des visuellen und okulomotorischen Profils dieses Benutzers (30) aufweist, wobei der mindestens eine Wert eine Messung der Sehschärfe dieses Benutzers (30) aufweist und mindestens einen Wert eines Parameters, der der in Schritt a3) bestimmten Sehtätigkeit zugeordnet ist;
b) Verbinden der elektronischen Bildanzeigevorrichtung (110, 210, 310,410) mit einer Anzeigedatenbank (100, 102) und Durchführen eines digitalen Eintrags in der Anzeigedatenbank (100, 102), der eine Vielzahl von Werten des Anzeigeparameters aufweist, die der elektronischen Bildanzeigevorrichtung (110, 210, 310, 410) und einer Kennung dieser elektronischen Bildanzeigevorrichtung (110, 210, 310, 410) zugeordnet sind, wobei der digitale Eintrag in einem Register der Anzeigedatenbank (100, 102) gespeichert ist, das eine Vielzahl von digitalen Einträgen aufweist, die einer Vielzahl von elektronischen Bildanzeigevorrichtungen (110, 210, 310, 410) zugeordnet sind, wobei jedem Eintrag einer elektronischen Bildanzeigevorrichtung des Registers eine eindeutigen Kennung zugeordnet ist;
c) Auswählen, für die Anzeige durch den Benutzer (30) eines von der elektronischen Bildanzeigevorrichtung (110, 210, 310, 410) angezeigten Bildes, eines optimalen Werts des Anzeigeparameters aus der Vielzahl der Werte der Anzeigeparameter des digitalen Eintrags, die der elektronischen Bildanzeigevorrichtung (110, 210, 310, 410) in der Anzeigedatenbank (100, 102) zugeordnet sind, in Abhängigkeit von dem digitalen Eintrag des mindestens einen Werts der Messung der Sehschärfe, die diesem Benutzer in der Benutzerdatenbank (100, 101) zugeordnet ist, und in Abhängigkeit von dem digitalen Eintrag des mindestens einen Werts eines Parameters, der der diesem Benutzer in der Benutzerdatenbank zugeordneten Sehtätigkeit zugeordnet ist;
d) automatisches Anwenden des optimalen Werts dieses Bildanzeigeparameters auf die elektronische Bildanzeigevorrichtung, um die Erkennung und/oder das Lesen des angezeigten Bildes und den Sehkomfort des Benutzers zu verbessern.

2. Verfahren zum individuellen Anpassen einer elektronischen Bildanzeigevorrichtung nach Anspruch 1, das darüber hinaus die folgenden Schritte aufweist:
a1) Bestimmen einer Sehkonfiguration des Benutzers (30) für die Anzeige von Bildern mithilfe der elektronischen Bildanzeigevorrichtung (110, 210, 310,410);
b1) Eintragen von mindestens einem Wert eines Parameters, der einer in Schritt a1) bestimmten Sehkonfiguration des Benutzers zugeordnet ist, in den digitalen Eintrag der Benutzerdatenbank (100, 101); und
c1) Auswählen des optimalen Werts des Anzeigeparameters aus der Vielzahl der Werte der Anzeigeparameter, die der elektronischen Bildanzeigevorrichtung zugeordnet sind, in Abhängigkeit auch von dem digitalen Eintrag des mindestens einen Werts eines Sehkonfigurationsparameters, der diesem Benutzer in der Benutzerdatenbank (100, 101) zugeordnet ist.

3. Verfahren zum individuellen Anpassen einer elektronischen Bildanzeigevorrichtung nach Anspruch 1, das darüber hinaus die folgenden Schritte aufweist:
a2) Empfangen eines digitalisierten Bildes oder eines digitalisierten Textes, das/der auf der elektronischen Bildanzeigevorrichtung (110, 210, 310, 410) anzuzeigen ist, und Extrahieren von mindestens einer Eigenschaft des Inhalts dieses digitalisierten Bildes bzw. dieses digitalisierten Textes;
b2) Eintragen von mindestens einem Wert, der einer Eigenschaft des Inhalts dieses digitalisierten Bildes bzw. dieses digitalisierten Textes zugeordnet ist, in den digitalen Eintrag der Benutzerdatenbank (100, 101);
c2) Auswählen des optimalen Werts des Anzeigeparameters aus der Vielzahl der Werte der Anzeigeparameter, die der elektronischen Bildanzeigevorrichtung zugeordnet sind, in Abhängigkeit von dem digitalen Eintrag des mindestens einen Werts, der einer Eigenschaft des Inhalts dieses digitalisierten Bildes bzw. dieses digitalisierten Textes zugeordnet ist.

4. Verfahren zum individuellen Anpassen einer elektronischen Bildanzeigevorrichtung nach einem der Ansprüche 1 bis 3, in dem der Schritt a) zum Bestimmen von mindestens einem Wert eines Bewertungsparameters des visuellen und okulomotorischen Profils dieses Benutzers den folgenden Schritt a4) aufweist:
a4) sequentielles Anzeigen eines Testbildes gemäß einer Vielzahl von Bildvergrößerungswerten mithilfe der elektronischen Anzeigevorrichtung (110, 210, 310, 410) und Empfangen eines Signals des Benutzers (30), um einen minimalen Bildvergrößerungswert für diesen Benutzer (30) zu bestimmen;
wobei das Verfahren zum individuellen Anpassen darüber hinaus die folgenden Schritte aufweist:
b4) Eintragen des minimalen Vergrößerungswerts, der dieser elektronischen Bildanzeigevorrichtung (110, 210, 310, 410) und diesem Benutzer (30) zugeordnet ist, in den digitalen Eintrag der Benutzerdatenbank (100, 101) und der Anzeigedatenbank (100, 102);
d4) Konfigurieren der elektronischen Bildanzeigevorrichtung (110, 210, 310, 410), um eine Vergrößerung zu verwenden, die größer oder gleich dem minimalen Bildvergrößerungswert ist.

5. Verfahren zum individuellen Anpassen einer elektronischen Bildanzeigevorrichtung nach einem der Ansprüche 1 bis 4, in dem die elektronische Bildanzeigevorrichtung einen Sensor aufweist, der zum Messen eines Umgebungsparameters ausgebildet ist, wobei das Verfahren die folgenden Schritte aufweist:
a5) Messen eines Umgebungsparameters, der der elektronischen Bildanzeigevorrichtung (110, 210, 310,410) und/oder dem Benutzer (30) zugeordnet ist, mithilfe des Sensors;
b5) Eintragen der Messung des Umgebungsparameters in den digitalen Eintrag der Benutzerdatenbank (100, 101);
c5) Auswählen des optimalen Werts des Anzeigeparameters in Abhängigkeit von dem digitalen Eintrag der Messung des Umgebungsparameters.

6. Verfahren zum individuellen Anpassen einer elektronischen Bildanzeigevorrichtung nach einem der Ansprüche 1 bis 5, in dem die elektronische Bildanzeigevorrichtung (110, 210, 310, 410) Mittel zur Sprachsynthese umfasst und in dem die Aktivierung der Mittel zur Sprachsynthese in Abhängigkeit von dem digitalen Eintrag ausgewählt wird, der die Vielzahl von Werten des Anzeigeparameters aufweist, die dieser elektronischen Bildanzeigevorrichtung in der Anzeigedatenbank (100, 102) zugeordnet sind, und mindestens einen Wert eines Bewertungsparameters des visuellen und okulomotorischen Profils, das diesem Benutzer in der Benutzerdatenbank (100, 101) zugeordnet ist, und/oder in Abhängigkeit eines Werts eines Parameters, der einer Sehkonfiguration des Benutzers in der Benutzerdatenbank (100, 101) zugeordnet ist, bzw. in Abhängigkeit eines Werts, der einer Eigenschaft des Inhalts dieses digitalisierten Bildes bzw. dieses digitalisierten Textes zugeordnet ist, bzw. in Abhängigkeit eines Werts eines Parameters, der einer Sehtätigkeit des Benutzers zugeordnet ist.

7. Verfahren zum individuellen Anpassen einer elektronischen Bildanzeigevorrichtung nach einem der Ansprüche 1 bis 6, in dem während des Schritts c) jedem Parameter, der zum Bestimmen des optimalen Werts des Anzeigeparameters verwendet wird, ein vorbestimmter Gewichtungskoeffizient zugeordnet wird.

8. Verfahren zum individuellen Anpassen einer elektronischen Bildanzeigevorrichtung nach einem der Ansprüche 1 bis 7, in dem die elektronische Bildanzeigevorrichtung (110, 210, 310, 410) einen Anzeigebildschirm (111, 211, 311, 312) aufweist und vorzugsweise aus einem Fernsehgerät, einem Computer, einem Internet-Terminal, einem Smartphone, einem digitalen Tablet, einem digitalen Lesegerät, einem persönlichen digitalen Assistenten (PDA), einem digitalen Vergrößerungsgerät, einem Tele-Vergrößerungsgerät, einer elektronischen Lupe, einem Videoprojektor ausgewählt wird.

9. Verfahren zum individuellen Anpassen einer elektronischen Bildanzeigevorrichtung nach einem der Ansprüche 1 bis 7, in dem die elektronische Bildanzeigevorrichtung (110, 210, 310, 410) eine Informationsbrille (310) des Typs monokular oder binokular aufweist, die ausgebildet ist zum Formen mindestens eines virtuellen Bildes, und wobei das Verfahren zum individuellen Anpassen darüber hinaus einen Schritt aufweist zum:
- Anpassen mindestens eines Werts eines Parameters zur individuellen Anpassung des virtuellen Bildes, das von der Informationsbrille (310) in Abhängigkeit von der von diesem Benutzer getragenen ophthalmologischen Brille angezeigt wird, in Abhängigkeit von den Eigenschaften, die dem realen Hintergrundbild zugeordnet sind, das von dem Benutzer über Transparenz durch die Informationsbrille gesehen wird, in Abhängigkeit vom Inhalt des angezeigten virtuellen Bildes und/oder in Abhängigkeit von der Umgebungsbeleuchtung, um die Wahrnehmung des Inhalts dieses virtuellen Bildes durch den Benutzer zu verbessern.

10. Verfahren zum individuellen Anpassen einer elektronischen Bildanzeigevorrichtung nach einem der Ansprüche 1 bis 7 oder 9, in dem die elektronische Bildanzeigevorrichtung eine Informationsbrille (310) des Typs binokular aufweist, die zum Formen eines rechten virtuelle Bildes in Richtung des rechten Auges des Benutzers und eines linken virtuellen Bildes in Richtung des linken Auges des Benutzers ausgebildet ist, wobei das Verfahren zum individuellen Anpassen darüber hinaus einen Schritt aufweist zum:
- Anpassen mindestens eines Werts eines Parameters zur individuellen Anpassung des rechten virtuelle Bildes und/oder des linken virtuellen Bildes, die von der binokularen Informationsbrille angezeigt werden, in Abhängigkeit vom Inhalt des angezeigten rechten virtuellen Bildes und vom Inhalt des angezeigten linken virtuellen Bildes, um die Verschmelzung der vom rechten Auge bzw. vom linken Auge des Benutzers wahrgenommenen rechten und linken virtuellen Bilder zu ermöglichen.

11. Verfahren zum individuellen Anpassen einer elektronischen Bildanzeigevorrichtung nach einem der Ansprüche 1 bis 10, in dem der mindestens eine Anzeigeparameter mit variablem Wert einen Parameter zur Bildvergrößerung, zur Bildposition, zum Kontrast, zur Helligkeit, zur grafischen Auflösung, zur Graustufe oder Farbe aufweist.

12. Elektronische Bildanzeigevorrichtung, die mindestens einen Anzeigeparameter mit variablem Wert aufweist, wobei die Vorrichtung zum Anzeigen eines Bildes und zum Ändern des angezeigten Bildes in Abhängigkeit von dem Wert des Anzeigeparameters ausgebildet ist, wobei die Vorrichtung Informatikmittel zum Implementieren eines Verfahrens zum individuellen Anpassen nach einem der Ansprüche 1 bis 11 aufweist.

13. Elektronische Bildanzeigevorrichtung nach Anspruch 12, die eine Informationsbrille (310) des Typs monokular oder binokular aufweist, die mindestens eine mit einer Bildquelle (300) verbundene Anzeige (311, 312) aufweist und zum Formen mindestens eines virtuellen Bildes vor dem Auge eines Benutzers (30) ausgebildet ist, der diese Informationsbrille (310) trägt, wobei die Informationsbrille mit einer Steuerschnittstelle (320) und einer Datenbank (100) verbunden ist, um mindestens einen Wert eines Parameters zur individuellen Anpassung des virtuellen Bildes anzupassen, das in Abhängigkeit von den visuellen und okulomotorischen Parametern des Benutzers, der diese Informationsbrille trägt, den Konfigurationsparametern der ophthalmologischen Brille, den Eigenschaften, die dem realen Hintergrundbild zugeordnet sind, das von dem Benutzer über Transparenz durch die Informationsbrille gesehen wird, angezeigt wird, in Abhängigkeit vom Inhalt des angezeigten virtuellen Bildes und/oder in Abhängigkeit von der Umgebungsbeleuchtung, um die Wahrnehmung des Inhalts dieses virtuellen Bildes durch den Benutzer (30) zu verbessern.

14. Elektronische Bildanzeigevorrichtung nach Anspruch 13, die eine Informationsbrille (310) des Typs binokular aufweist, die eine rechte Anzeige (312) aufweist, die zum Formen eines rechten virtuellen Bildes in Richtung des rechten Auges des Benutzers ausgebildet ist, und eine linke Anzeige (311), die zum Formen eines linken virtuellen Bildes in Richtung des linken Auges des Benutzers ausgebildet ist, wobei die Informationsbrille mit einer Steuerschnittstelle (320) und einer Datenbank (100) verbunden ist, um mindestens einen Wert eines Parameters zur individuellen Anpassung des virtuellen rechten und/oder virtuellen linken Bildes anzupassen, die in Abhängigkeit vom Inhalt des angezeigten rechten virtuellen Bildes und vom Inhalt des angezeigten linken virtuellen Bildes angezeigt werden, um die Verschmelzung der vom rechten Auge bzw. vom linken Auge des Benutzers wahrgenommenen rechten und linken virtuellen Bilder zu ermöglichen.

## Claims

1. A method for personalizing an image-displaying electronic device (110, 210, 310, 410) having at least one display parameter of variable value, the device being suitable for displaying an image (114) and for modifying the displayed image depending on the value of the display parameter, said personalizing method comprising adapting the value of the display parameter to a user (30) by way of the following steps:
a3) determining by the user a visual activity of the user for viewing images, the visual activity being selected among various possible visual activities, such as reading, writing, video games, looking at photos or films, for viewing images and/or consulting Internet pages by means of the image-displaying electronic device;
a) connecting the image-displaying electronic device (110, 210, 310, 410) to a user database (100, 101), determining and recording in the user database (100, 101) a digital record comprising at least one value of a parameter of evaluation of the visual and oculomotor profile of the user (30), said at least one value comprising a measurement of the visual acuity of this user (30), and at least one value of a parameter associated with the visual activity determined at step a3);
b) connecting the image-displaying electronic device (110, 210, 310, 410) to a display database (100, 102) and creating, in the display database (100, 102), a digital record comprising a plurality of display parameter values associated with the image-displaying electronic device (110, 210, 310, 410) and with an identifier of this image-displaying electronic device (110, 210, 310, 410), the digital record being stored in a register of the display database (100, 102) comprising a plurality of digital records associated with a plurality of image-displaying electronic devices (110, 210, 310, 410), each record of one image-displaying electronic device of the register being associated with a single identifier;
c) selecting, with regard to viewing by the user (30) of an image displayed by the image-displaying electronic device (110, 210, 310, 410), an optimum value of the display parameter from the plurality of those display parameter values of the digital record which are associated with the image-displaying electronic device (110, 210, 310, 410) in the display database (100, 102), depending on said digital record of said at least one value of a parameter of evaluation of the visual and oculomotor profile of the user associated with this user in the user database (100, 101) and depending on the digital record of the at least one value of a parameter associated with the visual activity associated with this user in the user database (100, 101); and
d) automatically applying the optimum value of this image display parameter to the image-displaying electronic device so as to improve the recognition and/or the readability of the displayed image and the visual comfort of the user.

2. The method for personalizing an image-displaying electronic device as claimed in claim 1, furthermore comprising the following steps:
a1) determining a visual configuration of the user (30) for viewing images by means of the image-displaying electronic device (110, 210, 310, 410);
b1) recording in the digital record of the user database (100, 101) at least one value of a parameter associated with a visual configuration of the user, said configuration being determined in step a1); and
c1) selecting the optimum value of the display parameter from the plurality of display parameter values associated with the image-displaying electronic device depending on the digital record of the at least one value of a visual configuration parameter associated with this user in the user database (100, 101).

3. The method for personalizing an image-displaying electronic device as claimed in claim 1, furthermore comprising the following steps:
a2) receiving a digitized image or a digitized text to be displayed on the image-displaying electronic device (110, 210, 310, 410) and extracting at least one property of the content of this digitized image or digitized text, respectively;
b2) recording in the digital record at least one value associated with a property of the content of this digitized image or digitized text, respectively; and
c2) selecting the optimum value of the display parameter from the plurality of display parameter values associated with the image-displaying electronic device depending on the digital record of the at least one value associated with a property of the content of this digitized image or digitized text, respectively.

4. The method for personalizing an image-displaying electronic device as claimed in one of claims 1 to 3, in which the step a) of determining at least one value of a parameter of evaluation of the visual and oculomotor profile of this user comprises the following step a4):
a4) displaying sequentially, by means of the displaying electronic device (110, 210, 310, 410), a test image following a plurality of image magnification values, and receiving a signal from the user (30) so as to determine a minimum image magnification value for this user (30);
and the personalizing method furthermore comprising the following steps:
b4) recording, in the digital record of the user database (100, 101) and of the display database (100, 102), the minimum magnification value associated with this image-displaying electronic device (110, 210, 310, 410) and with this user (30); and
d4) configuring the image-displaying electronic device (110, 210, 310, 410) so as to use a magnification higher than or equal to the minimum image magnification value.

5. The method for personalizing an image-displaying electronic device as claimed in one of claims 1 to 4, in which the image-displaying electronic device comprises a sensor suitable for measuring an environmental parameter, the method comprising the steps:
a5) of measuring by means of the sensor at least one value of the environmental parameter, which value is associated with the image-displaying electronic device (110, 210, 310, 410) and/or with the user (30);
b5) of recording in the digital record the measurement of the environmental parameter; and
c5) of selecting the optimum value of the display parameter depending on the digital record of the measurement of the environmental parameter.

6. The method for personalizing an image-displaying electronic device as claimed in one of claims 1 to 5, in which the image-displaying electronic device (110, 210, 310, 410) comprises speech synthesizing means and in which the activation of the speech synthesizing means is selected depending on the digital record comprising the plurality of those values of the display parameter which are associated with this image-displaying electronic device in the display database (100, 102), and that at least one value of a parameter of evaluation of the visual and oculomotor profile which is associated with this user in the user database (100, 101), and/or respectively depending on a value of a parameter associated with a visual configuration of the user in the user database (100, 101), and/or depending on a value associated with a property of the content of this digitized image or digitized text, respectively, and/or depending on a value of a parameter associated with a visual activity of the user.

7. The method for personalizing an image-displaying electronic device as claimed in one of claims 1 to 6, in which during step c), each parameter used to determine the optimum value of the display parameter is attributed a preset weighting coefficient.

8. The method for personalizing an image-displaying electronic device as claimed in one of claims 1 to 7, in which the image-displaying electronic device (110, 210, 310, 410) comprises a display screen (111, 211, 311, 312) and is preferably chosen from a television set, a computer, an Internet terminal, a smart phone, a tablet computer, an e-reader, a personal digital assistant (PDA), a digital magnifier, a video magnifier, an electronic magnifying glass and a video projector.

9. The method for personalizing an image-displaying electronic device as claimed in one of claims 1 to 7, in which the image-displaying electronic device (110, 210, 310, 410) comprises a piece of monocular or binocular informative eyewear (310) configured to form at least one virtual image, and in that the personalizing method furthermore comprises a step:
- of adapting at least one value of a personalization parameter of the virtual image displayed by the piece of informative eyewear (310) depending on the ophthalmic spectacles worn by this user, depending on the properties associated with the real background image seen by the user through the piece of informative eyewear, depending on the content of the virtual image displayed and/or depending on the ambient lighting, so as to improve the perception of the content of this virtual image by the user.

10. The method for personalizing an image-displaying electronic device as claimed in one of claims 1 to 7 or 9, in which the image-displaying electronic device comprises a piece of binocular informative eyewear (310) configured to form a right virtual image in the direction of the right eye of the user and a left virtual image in the direction of the left eye of the user and in that the personalizing method furthermore comprises a step:
- of adapting at least one value of a personalization parameter of the right virtual image and/or left virtual image displayed by the piece of binocular informative eyewear depending on the content of the displayed right virtual image and on the content of the displayed left virtual image so as to allow the right and left virtual images perceived by the right eye and left eye of the user, respectively, to fuse.

11. The method for personalizing an image-displaying electronic device as claimed in one of claims 1 to 10, in which the at least one display parameter of variable value comprises an image magnification parameter, an image position parameter, a contrast parameter, a brightness parameter, a graphical resolution parameter, a grey level parameter or a color parameter.

12. An image-displaying electronic device having at least one display parameter of variable value, the device being suitable for displaying an image and for modifying the displayed image depending on the value of the display parameter, the device comprising information technology means for implementing a personalizing method as claimed in one of claims 1 to 11.

13. The image-displaying electronic device as claimed in claim 12, comprising a piece of monocular or binocular informative eyewear (310) comprising at least one display (311, 312) connected to an image source (300) and configured to form at least one virtual image in front of the eye of a user (30) wearing this piece of informative eyewear (310), said piece of informative eyewear being connected to a control interface (320) and to a database (100) in order to adapt at least one value of a personalization parameter of the displayed virtual image depending on the visual and oculomotor parameters of the user wearing this piece of informative eyewear, the configuration parameters of his ophthalmic spectacles, the properties associated with the real background image seen by the user through the piece of informative eyewear and/or depending on the content of the displayed virtual image and/or depending on the ambient lighting, so as to improve the perception of the content of this virtual image by the user (30).

14. The image-displaying electronic device as claimed in claim 13, comprising a piece of binocular informative eyewear (310) comprising a right display (312) configured to form a right virtual image in the direction of the right eye of the user and a left display (311) configured to form a left virtual image in the direction of the left eye of the user, said piece of informative eyewear being connected to a control interface (320) and to a database (100) in order to adapt at least one value of a personalization parameter of the displayed right virtual image and/or left virtual image depending on the content of the displayed right virtual image and on the content of the displayed left virtual image so as to allow the right and left virtual images perceived by the right eye and left eye of the user, respectively, to fuse.
